# EUROPEAN PATENT APPLICATION

(11) **EP 2 518 531 A2**
(43) Date of publication of application: **31.10.2012**
(21) Application number: 12165654.0
(22) Date of filing: 26.04.2012
(51) Int. Cl.: G01V 1/00

(54) **Method and System to Disconnect a Utility Service Based on Seismic Activity**

(30) Priority: 29.04.2011 US 201113097386
(71) Applicant: General Electric Company, Schenectady, NY 12345 (US)
(72) Inventor: Meadows, Vernon, Atlanta, GA 30339 (US); Lafrance, Ryan Marc, Atlanta, GA 30339 (US)
(74) Representative: Picker, Madeline Margaret

(57) **Abstract**

Described herein are embodiments of methods and systems to disconnect utility service based on seismic activity. One aspect comprises a method. One embodiment of a method of disconnecting a utility service based on seismic activity comprises receiving, from a measurement device (202), an output signal. A level of seismic activity can be determined based on the output signal. If the determined level of seismic activity meets or exceeds a predetermined threshold level of seismic activity, then a disconnect signal is sent to disconnect a utility service from a facility

## Description

### BACKGROUND OF THE INVENTION

In the event of natural disasters, such as an earthquake, utility providers may need to discontinue service to various consumers of the utility's service. This is because that continuing to provide the utility service to a damaged or burning structure can further exacerbate the risk to those in the facility as well as emergency responders. Generally, disconnecting the utility service requires someone (e.g., a fireman) turning a switch or valve or pulling a meter at the damaged facility. In other instances, the utility may shut off large sections of its distribution system if the damage is widespread. However, doing so may shut off utility service to areas that are not affected or to areas where the utilities are needed to aid with rescue and repair efforts.

In many instances, utility providers desire to electronically communicate with the utility service meters for numerous purposes including scheduling disconnection or connection of utility services to the metered loads, automatic meter reading (AMR), load shedding and load control, automatic distribution and smart-grid applications, outage reporting, providing additional services such as Internet, video, and audio, etc. In many of these instances, to perform these functions the meters must be configured to communicate with one or more computing devices through a communications network, which can be wired, wireless or a combination of wired and wireless, as known to one of ordinary skill in the art.

In many instances, such meters are equipped with an electromechanical switch that can be actuated remotely to perform functions such as disconnection or connection of utility services to the metered loads, load shedding and load control, and the like. These meter switches, as well as switches in the utility's distribution system, can be used to isolate facilities that may have been damaged by seismic activity.

Therefore, systems and methods are desired that overcome challenges in the present state of the art, some of which are described above. In particular, systems and methods are desired for disconnecting utility service at one or more facilities based on seismic activity.

### BRIEF DESCRIPTION OF THE INVENTION

Described herein are embodiments of methods and systems for disconnecting a utility service upon detection of seismic activity. In general, embodiments of the present invention provide an improvement over current methods of disconnecting utility service by automatically disconnecting a utility service at a facility when seismic activity at the facility exceeds a predetermined threshold.

One aspect comprises a method. One embodiment of a method of disconnecting a utility service based on seismic activity comprises receiving, from a measurement device, an output signal. A level of seismic activity is determined by a processor based on the output signal. If the determined level of seismic activity meets or exceeds a predetermined threshold level of seismic activity, then a disconnect signal is sent by the processor to disconnect a utility service from a facility.

Another embodiment of a method of disconnecting a utility service based on seismic activity comprises receiving, from one of an accelerometer or a seismometer, an output signal. The accelerometer or the seismometer is located within a utility service meter located at a facility and the output signal is transmitted from the utility service meter over a network. A level of seismic activity is determined by a processor based on the output signal. If the determined level of seismic activity meets or exceeds a predetermined threshold level of seismic activity, then a disconnect signal is sent by the processor to disconnect a utility service from the facility. The disconnect signal is sent over the network to the utility service meter and the utility service is one of electric service, gas service, or water service. In response to the disconnect signal, the utility service is disconnected.

Another aspect of the present invention comprises a system. One embodiment of the system is comprised of a measurement device; one or more switches; and one or more processors. The one or more processors are configured to receive, from the measurement device, an output signal; determine a level of seismic activity based on the output signal; and send a disconnect signal to disconnect a utility service from a facility using the one or more switches if the determined level of seismic activity meets or exceeds a predetermined threshold level of seismic activity.

Additional advantages will be set forth in part in the description which follows or may be learned by practice. The advantages will be realized and attained by means of the elements and combinations particularly pointed out in the appended claims. It is to be understood that both the foregoing general description and the following detailed description are by way of explanation and example only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 is a block diagram of a section of an example utility distribution system;
FIG. 2A illustrates overview block diagram of an embodiment of a meter further comprising a measurement device for detecting seismic activity;
FIG. 2B is an illustration of an example measurement device circuit that comprises an accelerometer and a comparator;
FIG. 3 illustrates another overview block diagram of an embodiment of a meter further comprising a measurement device for detecting seismic activity;
FIG. 4 illustrates a block diagram of an entity capable of operating as a meter electronics in accordance with one embodiment of the present invention;
FIG. 5 is a flowchart illustrating an embodiment of the operations that can be taken in order to detect seismic activity;
FIG. 6 is a block diagram illustrating an example operating environment for performing the disclosed methods; and
FIG. 7 is a block diagram of a section of an example system for disconnecting a utility service based on seismic activity.

### DETAILED DESCRIPTION OF EMBODIMENTS OF THE INVENTION

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Example" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods. The present methods and systems may be understood more readily by reference to the following detailed description of preferred embodiments and the Examples included therein and to the Figures and their previous and following description.

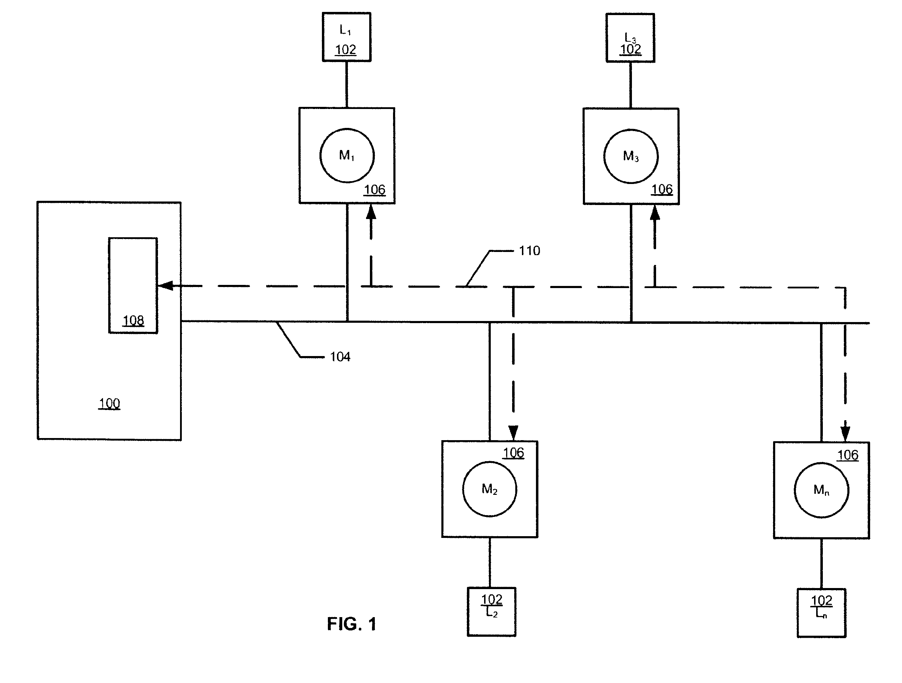

Referring to FIG. 1, an illustration of one type of system that would benefit from embodiments of the present invention is provided. FIG. 1 is a single-line block diagram of a section of an example utility distribution system such as, for example, an electric, water or gas distribution system. However, embodiments of the present invention can be used to benefit any meter that uses electromechanical switches to connect or disconnect a delivered service or product. As shown in FIG. 1, a utility service is delivered by a utility provider 100 to various loads L₁-Lₙ 102 through a distribution system 104. In one aspect, the utility service provided can be electric power. Though shown in FIG. 1 as a single-line diagram, it is to be appreciated that the distribution system 104 can be comprised of single-phase and/or poly-phase components and be of varying voltage levels. Consumption and demand by the loads 102 can be measured at the load locations by meters M₁-Mₙ 106. If an electric meter, the meters 106 can be single-phase or poly-phase electric meters, as known to one of ordinary skill in the art, depending upon the load 102. For example, if the utility service is electric power, the load can be single-phase and therefore the meter can be single phase. Single-phase loads can be connected to different phases (e.g., phase A, phase B or phase C) of the distribution system 104. Similarly, for example, the load 102 can be a poly-phase load such as a three-phase load and the meter can be a three-phase meter that meters the three phases serving the load 102. In some instances an electrical distribution system 106 may be a poly-phase system such as a three-phase, four-wire network, which supplies power-using feeders. Each of the feeder lines then branches into multiple circuits to power a plurality of local pole-mounted or pad-mounted transformers, which step the voltage down to final voltages of, for example, 120 or 240 volts per phase for delivery and metering at commercial and residential customer locations. Generally, residential customers can be connected to any one phase of the three-phase system using a single-phase meter and commercial customers can be connected to all the three phases using three-phase meter. In one aspect, the meter 106 is an electric meter and can be a smart meter as described herein and as known to one of ordinary skill in the art. Hereinafter, the specification will refer to the meter as a "meter," "electric meter," and/or "smart meter," where the terms can be used interchangeably. One non-limiting example of a smart meter is the GE I210+c meter as available from General Electric Company ("GE") (Schenectady, NY).

While consumption or demand information is used by the utility provider 100 primarily for billing the consumer, it also can be used for other purposes including planning and profiling the utility distribution system. In some instances, utility providers 100 desire to electronically communicate with the meters 106 for numerous purposes including scheduling disconnection or connection of utility services to the loads 102, automatic meter reading (AMR), load shedding and load control, automatic distribution and smart-grid applications, outage reporting, providing additional services such as Internet, video, and audio, etc. In many of these instances, the meters 106 must be configured to communicate with one or more computing devices 108 through a communications network 110, which can be wired (including fiber optic), wireless or a combination of wired and wireless, as known to one of ordinary skill in the art.

In one aspect, the network 110 is an advanced metering infrastructure (AMI) network. AMI refers to systems that measure, collect and analyze energy usage, and interact with advanced devices such as electricity meters, gas meters, water meters, electric vehicle charging stations (EVCS) and the like through various communication media either on request (on-demand) or on pre-defined schedules. This infrastructure includes hardware, software, communications, consumer energy displays and controllers, customer associated systems, meter data management (MDM) software, supplier and network distribution business systems, and the like. The network 110 between the meters 106 and business systems allows collection and distribution of information to customers, suppliers, utility companies and service providers. This enables these businesses to either participate in, or provide, demand response solutions, products and services. By providing information to customers, the system assists a change in energy usage from their normal consumption patterns, either in response to changes in price or as incentives designed to encourage lower energy usage use at times of peak-demand periods or higher wholesale prices or during periods of low operational systems reliability. In one aspect, the network 110 comprises at least a portion of a smart grid network. In one aspect, the network 110 utilizes one or more of one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), and the like. Such meters 106 can be equipped with one or more switches that can be used to remotely connect or disconnect the service or product delivered.

Therefore, it is desired that the meters 106 of a system such as that shown in FIG. 1 are configured to have capabilities beyond that of mere measurement of utility service consumption. Described herein are embodiments of methods and systems for disconnection of utility service based upon detection of seismic activity at a service location. In general, embodiments of the present invention provide an improvement over current methods of disconnecting utility service by automatically disconnecting a utility service at a facility when seismic activity at the facility exceeds a predetermined threshold.

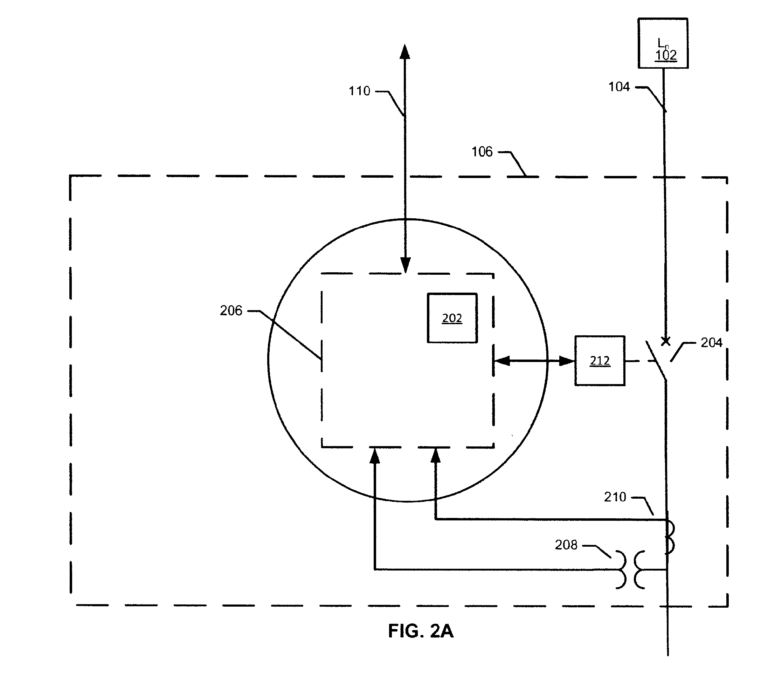

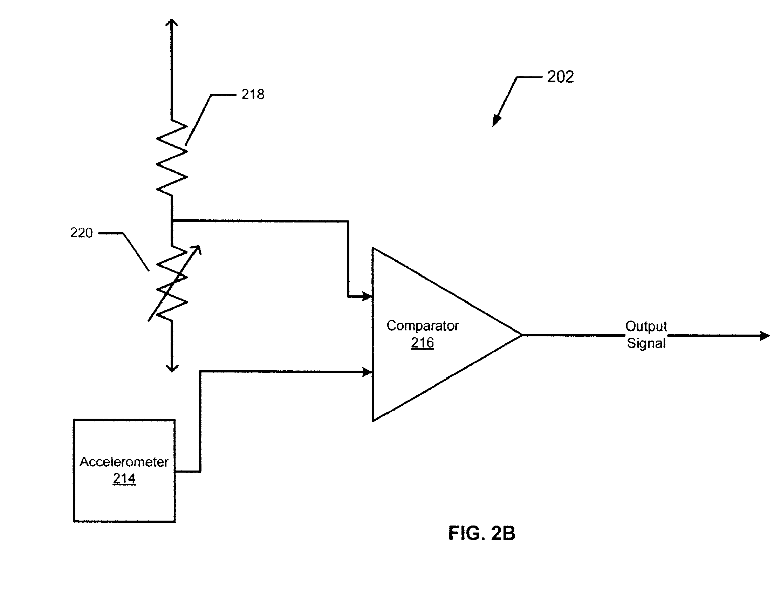

Referring now to FIG. 2A, in one aspect, a system and method of determining seismic activity using a measurement device and disconnecting utility service from at least one facility based on the level of seismic activity is described. In one aspect, the measurement device 202 is an accelerometer, such as a microelectromechanical systems (MEMS) accelerometer, or a seismometer. Examples of accelerometers that can be used include a Hitachi H48C tri-axis accelerometer module (Hitachi, Ltd., Tokyo, Japan) and a Memsic 2125 dual-axis accelerometer (MEMSIC, Inc., Andover, MA). In one embodiment, in addition to an accelerometer 214, the measurement device 202 comprises the circuit shown in FIG. 2B. In this embodiment, an analog signal from an accelerometer 214 feeds into a comparator 216 that can determine the strength of any seismic activity. If the seismic activity as measured by the accelerometer 214 is strong enough, the comparator 216 output will be asserted. The strength of seismic activity that creates the output signal can be set by the resistor 218 and potentiometer 220. When the level of seismic activity determined by the accelerometer 214 goes above a threshold as set by the resistor/potentiometer combination along with the comparator 214, an output signal is created. In one aspect, the output signal from the comparator 216 can go into a processor. In another aspect, the output signal from the comparator 216 can be used to activate a switch directly. A time element can be added to this by using a timing element such as a counter in series with the comparator 216 output signal to ensure that the seismic activity has a particular duration to warrant disconnection of a utility service.

In one aspect, the measurement device 202 is located within a utility service meter 106, such as an electric meter, at a facility. In one aspect, the main board 206 of a meter 106 is populated with a measurement device such as an accelerometer (e.g., a MEMS accelerometer) or a seismometer that provides a signal that corresponds to a seismic event. In one aspect, the signal can be provided to a processor, which determines the level of seismic activity that produced the signal. In one aspect, if the seismic activity is determined to exceed a threshold level, then the utility service can be disconnected. In one aspect, the measurement device and the processor are located within the meter 106. In one aspect, the processor is separate from the meter 106, and the output signal form the measurement device is transmitted over a network 110 to the processor. In one aspect, the network 110 is an AMI network, as described herein. Embodiments of the invention described herein are not limited to any specific metering technology. (e.g. electric, gas, water, etc.) In one aspect, the utility 100 can disable the seismic activity disconnect feature via the network 110 interface (e.g., the AMI interface) in the event that some expected period of high vibration will occur. Such periods of high vibration may be due to, for example, home renovations, road construction, and the like. The homeowner can alert the utility 100 of an expected period of high vibration and the utility 100 can then disable this feature for a specified period via the network 110 interface.

Referring again to FIG. 2A, FIG. 2A illustrates overview block diagram of an embodiment of a meter 106 further comprising a measurement device 202 for producing an output signal that corresponds to seismic activity at the location of the measurement device 202. In this example embodiment, the utility service is electric power, though other meters for utility services such as water, natural gas, and the like are contemplated within the scope of embodiments of the present invention. Analog voltage and current inputs are provided to meter electronics 206. The analog signals are derived from an electrical power feed 104. Generally, the electrical power feed 104 is an alternating current (AC) source. In one aspect, the power feed 104 is a single-phase power feed. In another aspect, the power feed 104 is a poly-phase (e.g., three-phase) power feed. In one aspect, the electrical power feed 104 can be the one being metered by the meter 106. In another aspect, the input voltage and input current analog signals can be derived from other electrical sources. In one aspect, the analog voltage signal can be provided by one or more potential transformers (PT) 208, if needed, though other means such as a voltage divider, capacitive coupling, or the like can be used. If the voltage level of the source is sufficiently low (e.g., .25 volts AC, or lower), then a PT 208 or other means of stepping down or transforming the voltage can be omitted. Similarly, in one aspect, the analog current signal can be provided by one or more current transformers (CT) 210. In one aspect, the one or more CTs 210 can have a turns ratio of 1:2500. In one aspect, one or more resistors (not shown) can be used to convert the current signal from the CT 210 into a voltage signal. In one aspect, seismic activity detection comprises a measurement device 202 and the meter electronics 206. In one aspect, the measurement device 202 produces an output signal. In one aspect, the output signal is in proportion to seismic activity at the location of the measurement device 202. In one aspect, the output signal from the measurement device 202 can be analyzed to determine the level of seismic activity that produced the signal. In one aspect, if it is determined that the output signal was produced by a level of seismic activity that met or exceeded a predetermined threshold level of seismic activity, then utility service can be disconnected from the facility served by the meter 106. For example, if the output signal produced by the measurement device 202 was determined to meet or exceed a level of seismic activity equal to or greater than the amount of seismic activity experienced during, for example, an earthquake that registers 6.0 on the Richter Scale or VII-IX on the Modified Mercalli scale, then a disconnect signal can be sent that results in the disconnection of utility service to the metered location. It is to be appreciated that the threshold level of seismic activity needed to trigger a disconnect signal can be set at various levels such as, for example, 3.0, 3.5. 4.0, 4.2, 4.5, 5.0, 6.0, etc. on the Richter Scale, or the equivalent using other scales such as the Rossi-Forel scale, the Modified Mercalli scale, the European Macroseismic Scale, the Shindo scale, the MSK-64 scale, the Liedu scale, and the like.

Peak ground acceleration (PGA) is a measure of earthquake acceleration on the ground and an important input parameter for earthquake engineering. Unlike the Richter Scale and moment magnitude scales, it is not a measure of the total energy (magnitude, or size) of an earthquake, but rather of how hard the earth shakes in a given geographic area (the intensity). In one aspect, the measurement device 202 described herein can be used to measure PGA at one or more locations. The Modified Mercalli intensity scale uses personal reports and observations to measure earthquake intensity, but PGA is measured by instruments, such as accelerographs, and it generally correlates well with the Modified Mercalli scale. PGA can be expressed in g (the acceleration due to Earth's gravity, equivalent to g-force) as either a decimal or percentage; in m/s*s (lg=9.81 m/s/s). To get this in percent "g" %g = ("acceleration" / 9.81 m/s/s). So for example if an accelerometer records 11 feet per second per second (11*12*2.54 = 335cm/sec/sec). The acceleration due to gravity is 980 cm/sec/sec. Expressed as percent is 335/980 = 0.34g.

The United States Geological Survey (USGS) has developed an instrumental intensity scale, which maps PGA and peak ground velocity on an intensity scale similar to the felt Mercalli scale. These values are used to create shake maps by seismologists around the world. Table I, below, shows the PGA correlated with the instrumental intensity scale.

**Table I**

| Instrumental Intensity | Acceleration (g) | Velocity (cm/s) | Perceived Shaking | Potential Damage |
|---|---|---|---|---|
| I | < 0.0017 | < 4.1 | Not Felt | None |
| II-III | 0.0017-0.014 | 0.1-1.1 | Weak | None |
| IV | 0.014 - 0.039 | 1.1-3.4 | Light | None |
| V | 0.039 - 0.092 | 3.4 - 8.1 | Moderate | Very light |
| VI | 0.092 - 0.18 | 8.1 - 16 | Strong | Light |
| VII | 0.18 - 0.34 | 16-31 | Very Strong | Moderate |
| VIII | 0.34 - 0.65 | 31 - 60 | Severe | Moderate to Heavy |
| IX | 0.65 - 1.24 | 60 - 116 | Violent | Heavy |
| X+ | > 1.24 | > 116 | Extreme | Very Heavy |

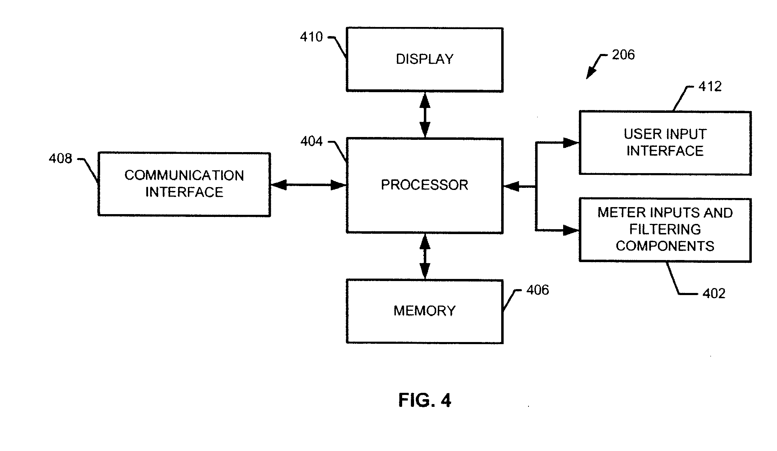

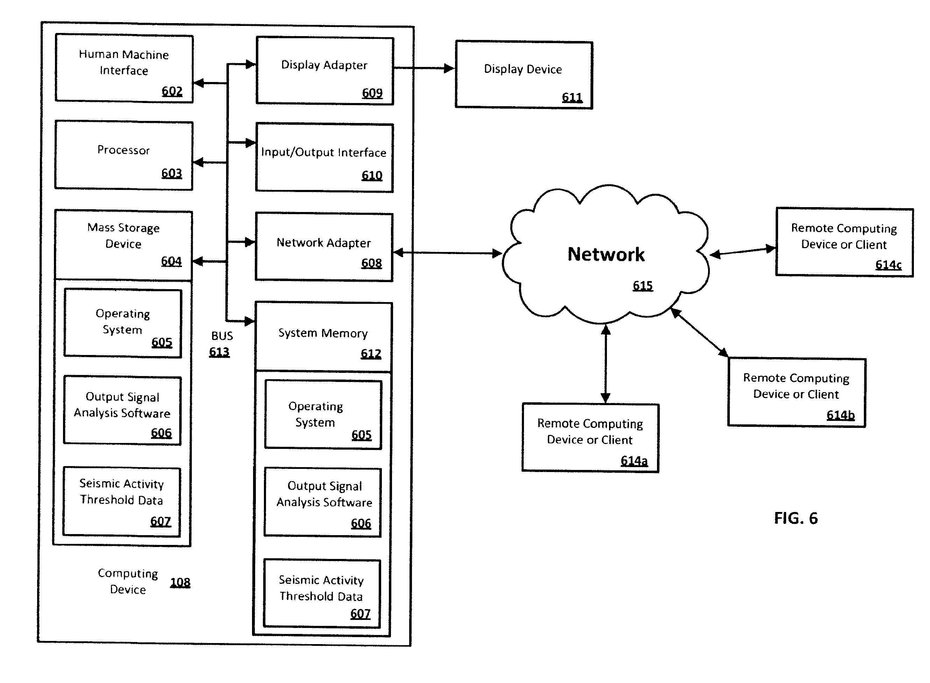

Assuming the instrumental intensity scale is approximately the same as the Modified Mercalli intensity scale, Table II, below, shows the correlation between the Modified Mercalli intensity scale and the Richter Scale. Therefore, PGA, as measured by the measurement device 202 can be used to determine seismic activity at the location of the measurement device 202. Thus, vibration information (PGA) can be equated with a level of seismic activity. The process of determining a level of seismic activity based on vibration information such as an output signal from a measurement device 202 (e.g., an accelerometer or a seismometer) can be performed by a processor, such as the processors described herein in reference to FIGS. 4 or 6.

**Table II**

| Richter Magnitude | Maximum |
|---|---|
| | Modified |
| | Mercalli |
| | Intensity |
| 1.0 - 3.0 | I |
| 3.0 - 3.9 | II-III |
| 4.0 - 4.9 | IV-V |
| 5.0 - 5.9 | VI-VII |
| 6.0 - 6.9 | VII-IX |
| 7.0+ | VIII or higher |

In one aspect, meter electronics 206, which can include an intelligent component such as, for example, a processor, microprocessor, or field programmable gate array (FPGA), can determine whether the output signal created by the measurement device 202 indicates seismic activity that meets or exceeds a threhold value for seismic activity, and in response can cause a disconnect switch 204 to open by use of a control mechanism 212. In another aspect, the the output signal created by the measurement device 202 can be transmitted over a network 110 to a separate intelligent device such as a processsor, microprocessor or FPGA that is separate from the meter 106 by way of a communication interface that comprises the meter electronics 206. In one aspect, the separate intelligent device can determine whether the signal created by the measurement device 202 indicates seismic activity that meets or exceeds a threhold value for seismic activity, and in response can cause a disconnect signal to be sent. In one aspect, the disconnect signal can be sent over the network 110 to the meter electronics 206. In another aspect, the disconnect signal can be sent over the network 110 to a switching/disconnect mechanism that is separate from the meter 106. If the disconnect signal is sent to the meter electronics 206, then meter electronics 206, in turn, can cause the disconnect switch 204 to open by use of a control mechanism 212. For example, in one aspect the meter 106 comprises a load control unit (e.g., relays) 212 to control the connection and disconnection of the utility service to the load 102. In some instances there can be requirements by various utilities to require on-site inspection of the metered facility prior to reconnection of the utility service to prevent reconnecting damaged systems located within the facility.

Further comprising the embodiment of FIG. 2A are the meter's electronics 206. In one aspect, the meter electronics 206 comprise at least a memory, and one or more processors and provide an interface for receiving a signal and causing the switch 204 to actuate via the control 212. In one aspect, the signal is received from the network 110. In one aspect, the meter electronics 206 can be used to send an output signal from the measurement device 202 over the network 110 to a remote processor. The memory of the meter electronics 206 can be used to store recorded signal information as received from the measurement device 202. The meter electronics 206 can comprise a transmitter that can be used to transmit the output signal from the measurement device 202 over the network 110 to a separate computing device 108. In one aspect, the meter electronics 206 in association with the measurement device 202 can be used to produce a signal only if it is determined that the output signal of the measurement device indicates seismic activity that meets or exceeds a threshold level of seismic activity.

The output signal of the measurement device 202 can be analyzed to determine a level of seismic activity, either by the processor of the meter electronics 206, or the processor of a remote computing device 108. In one aspect, the output signal of the measurement device 202 provides vibration data. The vibration data can be examined for magnitude and duration to correlate the data with seismic activity scales, as described herein. If the vibration data indicates that the seismic activity at the location of the measurement device 202 meets or exceeds a predetermined scale value, then the processor (either the meter electronics 206 processor or a remote processor) sends a signal to the meter electronics 206 that causes the switch 204 to open, thus disconnecting the load 102 from utility service. In one aspect, the meter's electronics 206 can comprise one or more metering micro-controllers including a Teridian 6533 controller or a Teridian 6521 controller as are available from Maxim Integrated Products, Inc. (Sunnyvale, California), among others.

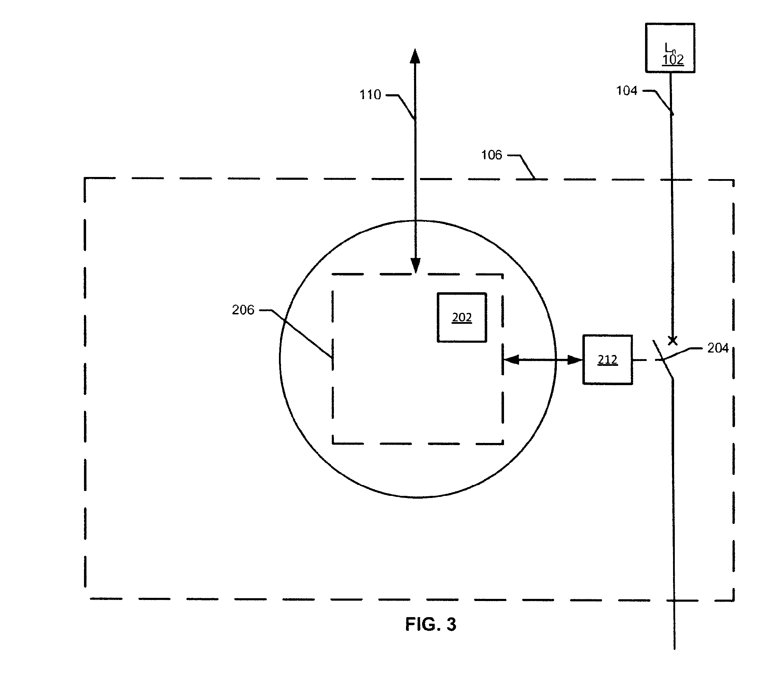

FIG. 3 illustrates another overview block diagram of an embodiment of a meter 106 further comprising a measurement device 202 for determining seismic activity. FIG. 3 illustrates a system comprised of a meter 106. The meter 106 can be used to measure consumption of various different services or products such as electricity, gas, water, and the like. In one aspect, the meter 106 is associated with a switch 204. The switch 204 is configured to be actuated by the meter's electronics 206 and implemented using a control 212. In one aspect, the switch 204 is configured to be actuated remotely by an actuation signal received by the meter's electronics 206 and implemented using a control 212. In one aspect, actuating the switch comprises sending one of an "open" or a "close" signal to the switch 204. The system is further comprised of a measurement device 202. In one aspect, the measurement device 202 is an accelerometer. In another aspect, the measurement device 202 is a seismometer. In one aspect, the measurement device 202 produces signals associated with the meter 106. For example, seismic activity at the location of the meter 106 can cause vibration of the measurement device 202, which causes the measurement device 202 to produce an output signal. In one aspect, the output signal can be analyzed to determine the level of seismic activity experienced by the measurement device 202. In one aspect, the output signal can be filtered prior to analysis. In one aspect, the output signal from the measurement device 202 can be digitally filtered to reduce unanticipated and undesired results, such as, but not limited to, noise. In various aspects, the type of digital filtering can include, but is not limited to, Infinite Impulse Response (IIR) and Finite Impulse Response (FIR) filters, as known to one of ordinary skill in the art. In one aspect, a digital filter comprises part of the meter's electronics 206. In one aspect, a digital filter comprises a part of a computing device 108 that receives the output signals over a network 110. In one aspect, analyzing the output signal to determine the level of seismic activity experienced by the measurement device 202 comprises analyzing the output signal using time-domain an analysis. In another aspect, analyzing the output signal to determine the level of seismic activity experienced by the measurement device 202 comprises analyzing the output signal using frequency-domain analysis. Notwithstanding the technique used, the amount of seismic activity as determined from the output signal received from the measurement device 202 can be compared against a predetermined threshold level of seismic activity to determine whether to disconnect the utility service. In one aspect, the utility service can be disconnected by opening the switch 204.

In one aspect, an embodiment of the system is further comprised of a transmitter and a computing device 108. The transmitter can used to transmit the output signal from the measurement device 202 over a network 110 to the computing device 108 and the computing device 108 can be used to analyze the output signal to determine the level of seismic activity at the measurement device 202. In one aspect, analyzing the output signal from the measurement device 202 comprises comparing the output signal known output signals at various levels of seismic activity to determine the level of seismic activity that generated the output signal. If the level of seismic activity the generated the output signal is determined to be at or above a threshold level, then a disconnect signal can be sent from the processor of the computing device 108 over the network 110. In one aspect, the disconnect signal is sent to the meter electronics 206, whereupon the processor of the meter electronics 206 causes actuation of the switch 204 by means of a control 212, thereby disconnecting the load 102 from utility service.

In another aspect, analysis of the output signal is performed by the processor of the meter electronics 206. If the level of seismic activity the generated the output signal is determined to be at or above a threshold level, then the processor of the meter electronics 206 causes actuation of the switch 204 by means of a control 212, thereby disconnecting the load 102 from utility service.

Referring now to FIG. 4, a block diagram of an entity capable of operating as meter electronics 206 is shown in accordance with one embodiment of the present invention. The entity capable of operating as a meter electronics 206 includes various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as a meter electronics 206 can generally include means, such as one or more processors 404 for performing or controlling the various functions of the entity. As shown in FIG. 4, in one embodiment, meter electronics 206 can comprise meter inputs and filtering components 402. In one aspect, the meter inputs and filter components 402 can comprise voltage and current inputs, one or more ADCs, filtering components, and the like. Further comprising this embodiment of meter electronics 206 is a processor 404 and memory 406.

In one embodiment, the one or more processors 404 are in communication with or include memory 406, such as volatile and/or non-volatile memory that stores content, data or the like. For example, the memory 406 may store content transmitted from, and/or received by, the entity. The memory 406 can also store data such as seismic activity threshold data. Also, for example, the memory 406 may store software applications, instructions or the like for the one or more processors 404 to perform steps associated with operation of the entity in accordance with embodiments of the present invention. In particular, the one or more processors 404 may be configured to perform the processes discussed in more detail herein for disconnecting a utility service based on seismic activity. The one or more processor 404 can be configured to receive an output signal from a measurement device. In one aspect, the measurement device can be one of an accelerometer or a seismometer. In one aspect, the accelerometer or the seismometer is located within the utility service meter located at a facility. The one or more processors 404 can determine a level of seismic activity based on the output signal. If the determined level of seismic activity meets or exceeds a predetermined threshold level of seismic activity, then the one or more processors 404 can send a disconnect signal to disconnect a utility service from a facility. In one aspect, the utility service is disconnected in response to the disconnect signal. In one aspect, sending, by the one or more processors 404, a disconnect signal to disconnect the utility service from the facility if the determined level of seismic activity meets or exceeds a predetermined threshold level of seismic activity comprises sending the disconnect signal if the determined level of seismic activity meets or exceeds, for example, a level 6.0 Richter Scale, or equivalent, seismic activity. In one aspect, the utility service meter comprises one of one of an electric service, gas service or water service meter.

In another aspect, the meter electronics 206 can be used to send an output signal from a measurement device over a network to a separate processor. In one aspect, the network is an AMI network, as described herein. In one aspect, if the separate processor determines that the determined level of seismic activity meets or exceeds a predetermined threshold level of seismic activity, then the separate processor can send a disconnect signal to disconnect a utility service from a facility. In one aspect, the disconnect signal is sent over the network, such as the AMI network. In one aspect, the disconnect signal is sent over the network to the meter electronics 206. In one aspect, meter electronics 206 are used to receive the disconnect signal from the separate processor. In one aspect, the utility service is disconnected in response to the meter electronics 206 receiving the disconnect signal. In one aspect, sending, by the separate processor, a disconnect signal to disconnect the utility service from the facility if the determined level of seismic activity meets or exceeds a predetermined threshold level of seismic activity comprises sending the disconnect signal if the determined level of seismic activity meets or exceeds, for example, a level 6.0 Richter Scale, or equivalent, seismic activity. In one aspect, the utility service meter comprises one of one of an electric service, gas service or water service meter.

In addition to the memory 406, the one or more processors 404 can also be connected to at least one interface or other means for displaying, transmitting and/or receiving data, content or the like. In this regard, the interface(s) can include at least one communication interface 408 or other means for transmitting and/or receiving data, content or the like, as well as at least one user interface that can include a display 410 and/or a user input interface 412. In one aspect, the communication interface 408 can be used to transfer at least a portion of the output signal from the measurement device to a remote computing device 108 such as the one described below. For example, in one instance the communication interface 408 can be used to transfer at least a portion of the output signal form the measurement device to a computing device 108 over a communication network 110 so that the transferred output signal can be analyzed to determine a level of seismic activity experienced by the measurement device. Similarly, the communication interface 408 can be used to receive a disconnect signal from the computing device 108 over the communication network 110 if it is determined that the seismic activity experienced by the measurement device meets or exceeds a predetermined threshold. The user input interface 412, in turn, can comprise any of a number of devices allowing the entity to receive data from a user, such as a keypad, a touch display, a joystick or other input device.

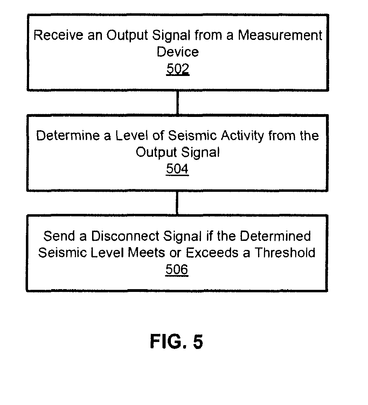

Referring now to FIG. 5, the operations are illustrated that may be taken in order to disconnect a utility service based on seismic activity. At step 502, an output signal is received from a measurement device. In one aspect, the measurement device can be one of an accelerometer or a seismometer. In one aspect, the accelerometer or the seismometer is located within a utility service meter located at a facility. At step 504, a level of seismic activity is determined based on the output signal. In one aspect, the level of seismic activity is determined by a processor within a utility service meter that also comprises the measurement device. In another aspect, the level of seismic activity is determined by a processor separate from the utility service meter that comprises the measurement device. At step 506, if the determined level of seismic activity meets or exceeds a predetermined threshold level of seismic activity, then a disconnect signal is sent to disconnect a utility service from a facility. In one aspect, the utility service is disconnected in response to the disconnect signal. In one aspect, the disconnect signal to disconnect the utility service from the facility is sent if the determined level of seismic activity meets or exceeds, for example, a level 6.0 Richter Scale, or equivalent, seismic activity. In one aspect, the utility service meter comprises one of one of an electric service, gas service or water service meter.

The above system has been described above as comprised of units. One skilled in the art will appreciate that this is a functional description and that software, hardware, or a combination of software and hardware can perform the respective functions. A unit, such as a smart appliance, a smart meter, a smart grid, a utility computing device, a vendor or manufacturer's computing device, etc., can be software, hardware, or a combination of software and hardware. The units can comprise the output signal analysis software 606 as illustrated in FIG. 6 and described below. In one example aspect, the units can comprise a computing device 108 as referenced above and further described below.

FIG. 6 is a block diagram illustrating an example operating environment for performing the disclosed methods. This example operating environment is only an example of an operating environment and is not intended to suggest any limitation as to the scope of use or functionality of operating environment architecture. Neither should the operating environment be interpreted as having any dependency or requirement relating to any one or combination of components illustrated in the example operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, smart meters, smart-grid components, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device in the form of a computing device 108. The components of the computing device 108 can comprise, but are not limited to, one or more processors or processing units 603, a system memory 612, and a system bus 613 that couples various system components including the processor 603 to the system memory 612. In the case of multiple processing units 603, the system can utilize parallel computing. In one aspect, the processor 603 is configured to perform the processes discussed in more detail herein for disconnecting a utility service based on seismic activity. The one or more processors 603 can be configured to receive an output signal from a measurement device. In one aspect, the measurement device can be one of an accelerometer or a seismometer. In one aspect, the accelerometer or the seismometer is located within the utility service meter located at a facility. In one aspect, the output signal is received over a network. The one or more processors 603 can determine a level of seismic activity based on the output signal. If the determined level of seismic activity meets or exceeds a predetermined threshold level of seismic activity, then the one or more processors 603 can send a disconnect signal to disconnect a utility service from a facility. In one aspect, the disconnect signal is sent over the network and received by meter electronics. In one aspect, the utility service meter comprises one of one of an electric service, gas service or water service meter.

The system bus 613 represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 613, and all buses specified in this description can also be implemented over a wired or wireless network connection and each of the subsystems, including the processor 603, a mass storage device 604, an operating system 605, output signal analysis software 606, seismic activity threshold data 607, a network adapter 608, system memory 612, an Input/Output Interface 610, a display adapter 609, a display device 611, and a human machine interface 602, can be contained within one or more remote computing devices or clients 614a,b,c (which include meter comprising meter electronics) at physically separate locations, connected through buses of this form, in effect implementing a fully distributed system or distributed architecture.

The computing device 108 typically comprises a variety of computer readable media. Example readable media can be any available media that is non-transitory and accessible by the computing device 108 and comprises, for example and not meant to be limiting, both volatile and non-volatile media, removable and non-removable media. The system memory 612 comprises computer readable media in the form of volatile memory, such as random access memory (RAM), and/or non-volatile memory, such as read only memory (ROM). The system memory 612 typically contains data such as seismic activity threshold data 607 and/or program modules such as operating system 605 and output signal analysis software 606 that are immediately accessible to and/or are presently operated on by the processing unit 603. The output signal analysis software 606 can cause the processor 603 to receive an output signal from a measurement device. In one aspect, the measurement device can be one of an accelerometer or a seismometer. In one aspect, the accelerometer or the seismometer is located within the utility service meter located at a facility. In one aspect, the output signal is received over a network. The one or more processors 603 can determine a level of seismic activity based on the output signal. If the determined level of seismic activity meets or exceeds a predetermined threshold level of seismic activity as stored in the memory as seismic activity threshold data 607, then the one or more processors 603 can send a disconnect signal to disconnect a utility service from a facility. In one aspect, the disconnect signal is sent over the network and received by meter electronics. In one aspect, the utility service meter comprises one of one of an electric service, gas service or water service meter.

In another aspect, the computing device 108 can also comprise other non-transitory, removable/non-removable, volatile/non-volatile computer storage media. By way of example, FIG. 6 illustrates a mass storage device 604 that can provide non-volatile storage of computer code, computer readable instructions, data structures, program modules, and other data for the computing device 108. For example and not meant to be limiting, a mass storage device 604 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 604, including by way of example, an operating system 605 and signature analysis software 606. Each of the operating system 805 and signature analysis software 606 (or some combination thereof) can comprise elements of the programming and the output signal analysis software 606. Seismic activity threshold data 607 can also be stored on the mass storage device 604. Seismic activity threshold data 607 can be stored in any of one or more databases known in the art. Examples of such databases comprise, DB2® (IBM Corporation, Armonk, NY), Microsoft® Access, Microsoft® SQL Server, Oracle® (Microsoft Corporation, Bellevue, Washington), mySQL, PostgreSQL, and the like. The databases can be centralized or distributed across multiple systems.

In another aspect, the user can enter commands and information into the computing device 108 via an input device (not shown). Examples of such input devices comprise, but are not limited to, a keyboard, pointing device (e.g., a "mouse"), a microphone, a joystick, a scanner, tactile input devices such as gloves, and other body coverings, and the like These and other input devices can be connected to the processing unit 603 via a human machine interface 602 that is coupled to the system bus 613, but can be connected by other interface and bus structures, such as a parallel port, game port, an IEEE 1394 Port (also known as a Firewire port), a serial port, or a universal serial bus (USB).

In yet another aspect, a display device 611 can also be connected to the system bus 613 via an interface, such as a display adapter 609. It is contemplated that the computing device 108 can have more than one display adapter 609 and the computing device 108 can have more than one display device 611. For example, a display device can be a monitor, an LCD (Liquid Crystal Display), or a projector. In addition to the display device 611, other output peripheral devices can comprise components such as speakers (not shown) and a printer (not shown), which can be connected to the computer 108 via Input/Output Interface 610. Any step and/or result of the methods can be output in any form to an output device. Such output can be any form of visual representation, including, but not limited to, textual, graphical, animation, audio, tactile, and the like.

The computing device 108 can operate in a networked environment using logical connections to one or more remote computing devices or clients 614a,b,c. By way of example, a remote computing device 614 can be a personal computer, portable computer, a server, a router, a network computer, a smart meter, a vendor or manufacture's computing device, smart grid components, a peer device or other common network node, and so on. Logical connections between the computing device 108 and a remote computing device or client 614a,b,c can be made via a local area network (LAN) and a general wide area network (WAN). Such network connections can be through a network adapter 608. A network adapter 608 can be implemented in both wired and wireless environments. Such networking environments are conventional and commonplace in offices, enterprise-wide computer networks, intranets, and other networks 615 such as an AMI network, the Internet, and the like.

For purposes of illustration, application programs and other executable program components such as the operating system 605 are illustrated herein as discrete blocks, although it is recognized that such programs and components reside at various times in different storage components of the computing device 108, and are executed by the data processor(s) of the computer. An implementation of output signal analysis software 606 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Example computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

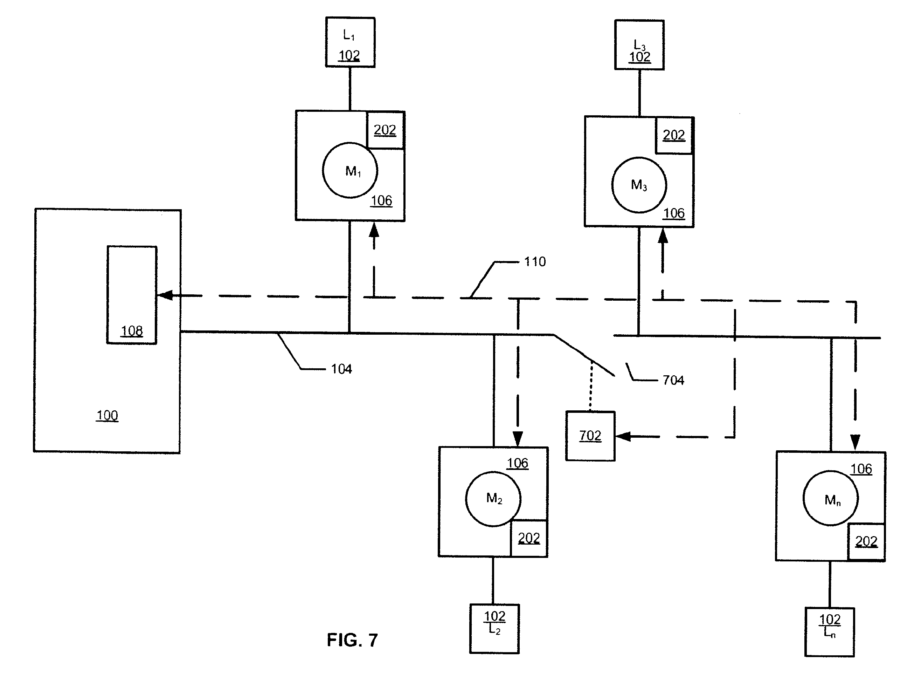

FIG. 7 is a block diagram of a section of an example system for disconnecting a utility service based on seismic activity. FIG. 7 illustrates an embodiment of a system comprised of one or more measurement devices 202. In one aspect, the measurement device 202 comprises one of an accelerometer or a seismometer. Though shown as being co-located with meters 106, it is to be appreciated that the measurement devices 202 can be located at other locations on, within or near facilities that could be affected by a seismic event. Signals from the one or more measurement devices 202 can be transmitted to a processor. In one aspect, the processor can be a part of a computing device 108 separate from the one or more meters 106. In other aspects, the processor can be incorporated within one or more meters 106. Further comprising the system of FIG. 7 are one or more switches 704 and a control mechanism 702 for the switches 704. The one or more switches 704 can be used to disconnect utility service as provided by a utility distribution system 104 from one or more meters 106 serving one or more facilities. For example, as shown in FIG. 7, switches 704 can be used to disconnect utility service from meters (and corresponding facilities) M₃ and Mₙ. As shown in the example system of FIG. 7, the processor (whether located within the computing device 108 or within one or more meters 106) is configured to receive, from at least one of the one or more measurement devices 202, an output signal. In one aspect, the output signal is received over a network 110, such as an AMI network. The processor that receives the output signal(s) is configured to determine a level of seismic activity based on the output signal. For example, the processor can be configured to determine that the output signal was created by an earthquake that ranks as a 3.0, 3.5, 4.0, 4.2, 4.5, 5.0, 6.0, etc. on the Richter Scale, though other scales of seismic activity are contemplated within the scope of this invention. If the determined level of seismic activity meets or exceeds a threshold level of seismic activity, then the processor can send a disconnect signal to disconnect a utility service from a facility using the one or more switches 704. In one aspect, the threshold level of seismic activity is a predetermined threshold level of seismic activity such as, for example, a 6.0 on the Richter Scale. In one aspect, the disconnect signal is sent over the network 110 to a control mechanism 702, which causes the one or more switches to disconnect utility service from the affected meters 106 (meters M₃ and Mₙ). Therefore, a portion of the distribution system 104 that may be affected by a seismic event can be disconnected from utility service while a portion of the distribution system 104 that is not as severely affected can still receive utility service. In various aspects, the distribution system 104 can be a distribution system for electric service, gas service or water service.

As described above and as will be appreciated by one skilled in the art, embodiments of the present invention may be configured as a system, method, or computer program product. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable non-transitory computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as the one or more processors 404 discussed above with reference to FIG. 4 and the one or more processor 603 discussed above with reference to FIG. 6, to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus (e.g., one or more processors 404 discussed above with reference to FIG. 4 and the one or more processor 603 discussed above with reference to FIG. 6) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system comprising:
a measurement device (202);
one or more switches (204, 704); and
one or more processors (603, 404), wherein the one or more processors (603, 404) are configured to:
receive, from the measurement device (202), an output signal;
determine a level of seismic activity based on the output signal; and
send a disconnect signal to disconnect a utility service from a facility using the one or more switches (204, 704) if the determined level of seismic activity meets or exceeds a predetermined threshold level of seismic activity.

2. The system of Claim 1, wherein the measurement device (202) comprises one of an accelerometer or a seismometer.

3. The system of Claim 2, wherein the accelerometer or the seismometer is located within a utility service meter (106) located at the facility.

4. The system of Claim 1,2 or 3, further comprising a network (110), wherein the one or more processors (603) receive the output signal over the network (110).

5. The system of Claim 4, wherein the network (110) is an advanced metering infrastructure (AMI) network.

6. The system of any one of Claims 1 to 5, wherein the processor (404) is located within a utility service meter located at the facility, or the processor (603) is located separate from a utility service meter located at the facility.

7. The system of Claim 6, comprising a network (110), wherein the one or more processors (603, 404) receive the output signal over the network, wherein preferably the network is an advanced metering infrastructure (AMI) network.

8. The system of any one of Claims 1 to 7, wherein the one or more processors (603, 404) are configured to send the disconnect signal if the determined level of seismic activity meets or exceeds a level 6.0 Richter Scale, or equivalent, seismic activity.

9. The system of any one of Claims 1 to 8, wherein the utility service comprises one of electric service, gas service or water service.

10. A method of disconnecting a utility service based on seismic activity comprising:
receiving, from a measurement device (202), an output signal;
determining a level of seismic activity based on the output signal; and
sending a disconnect signal to disconnect a utility service from a facility if the determined level of seismic activity meets or exceeds a predetermined threshold level of seismic activity.

11. The method of Claim 10, wherein sending a disconnect signal to disconnect the utility service from the facility if the determined level of seismic activity meets or exceeds a predetermined threshold level of seismic activity comprises sending the disconnect signal if the determined level of seismic activity meets or exceeds a level 6.0 Richter Scale, or equivalent, seismic activity.

12. The method of Claim 10 or Claim 11, wherein sending a disconnect signal to disconnect the utility service from the facility if the determined level of seismic activity meets or exceeds a predetermined threshold level of seismic activity comprises sending the disconnect signal to disconnect one of electric service, gas service or water service if the determined level of seismic activity meets or exceeds a predetermined threshold level of seismic activity.

13. The method of Claim 10, 11 or 12, wherein the network (110) is an advanced metering infrastructure (AMI) network.

14. The method of any one of Claims 10 to 13, wherein receiving the output signal comprises receiving the output signal over a network (110).

15. A method of disconnecting a utility service based on seismic activity comprising:
receiving, from a measurement device (202), an output signal, wherein the measurement device (202) is located within a utility service meter (106) located at a facility and the output signal is transmitted from the utility service meter (106) over a network (110);
determining, using a processor (603), a level of seismic activity based on the output signal;
sending, by the processor (603), a disconnect signal to disconnect a utility service from the facility if the determined level of seismic activity meets or exceeds a predetermined threshold level of seismic activity, wherein the disconnect signal is sent over the network (110) to the utility service meter (106) and the utility service is one of electric service, gas service, or water service; and
disconnecting the utility service in response to the disconnect signal.
